# EUROPÄISCHE PATENTSCHRIFT

(11) **EP 3 341 103 B1**
(45) Veröffentlichungstag und Bekanntmachung des Hinweises auf die Patenterteilung: **19.06.2019**
(21) Anmeldenummer: 16767144.5
(22) Anmeldetag: 23.08.2016
(51) Int. Cl.: B01D 29/21

(54) **AN EINEN ANSCHLUSSFLANSCH ANBAUBARER FILTER UND FILTEREINSATZ DAFÜR**
FILTER WHICH CAN BE ATTACHED TO A CONNECTION FLANGE AND FILTER INSERT FOR SAID FILTER
FILTRE POUVANT ÊTRE INSTALLÉ SUR UNE BRIDE DE RACCORDEMENT ET INSERT DE FILTRE POUR CELUI-CI

(30) Priorität: 28.08.2015 DE 102015114313
(43) Veröffentlichungstag der Anmeldung: 04.07.2018
(73) Patentinhaber: Hengst SE, 48147 Münster (DE)
(72) Erfinder: ARDES, Wilhelm, 59387 Ascheberg (DE)
(74) Vertreter: Linnemann, Winfried
(86) Internationale Anmeldenummer: PCT/EP2016/069895
(87) Internationale Veröffentlichungsnummer: WO 2017/036855

(56) Entgegenhaltungen:
- DE-U1- 29 716 366
- DE-U1-202014 104 029

## Beschreibung

Die Erfindung betrifft einen Filter, der an einen Anschlussflansch anbaubar ist, wobei der Filter einen austauschbaren Filtereinsatz mit einem hohlzylindrischen, stirnseitig von zwei Endscheiben eingefassten Filterstoffkörper aufweist, wobei der Filter ein becherförmiges Gehäuse aufweist, welches an seinem freien Rand mittels einer umlaufenden Dichtung im montierten Zustand gegen eine Dichtfläche des Anschlussflansches abdichtbar ist, und wobei die Dichtung auf dem Außenumfang eines einen Teil des Filtereinsatzes bildenden umlaufenden Dichtungsträgers angeordnet ist. Außerdem betrifft die Erfindung einen Filtereinsatz zur Verwendung in dem Filter.

Ein Filter der eingangs genannten Art und ein zugehöriger Filtereinsatz sind aus der DE 20 2014 104 029 U1 bekannt. Hier ist zur Sicherung der Dichtung eine umlaufende Rippe offenbart, die bei der Montage des Filters aus dem unmittelbaren Bereich der Dichtung herausgeführt wird.

Aus der DE 297 16 366 U1 ist eine Endscheibe für einen Filtereinsatz eines Flüssigkeitsfilters bekannt, wobei die Endscheibe mit einem axialen Dichtring versehen ist und wobei auf der Endscheibe mehrere in zwei konzentrischen Reihen angeordnete Erhebungen vorgesehen sind, die zu den Erhebungen der jeweils anderen Reihe gerichtete Vorsprünge aufweisen und die zwischen sich einen Lichtraum aufweisen, der kleiner ist als das Querschnittsprofil des Dichtrings. Hiermit wird der Dichtring durch einen Klemmsitz an der Endscheibe gehalten, damit für den Transport vom Filterhersteller zum Anwender sichergestellt wird, dass auch bei Transporterschütterungen und ähnlichen Einflüssen der Dichtring sicher an seinem vorgesehenen Platz an der Endscheibe verbleibt.

Es hat sich als wünschenswert herausgestellt, den bekannten Filter dahingehend zu verbessern, dass mit einer höheren Sicherheit dafür gesorgt wird, dass bei einer Demontage des Filters zum Zweck eines Filtereinsatzwechsels die Dichtung am Dichtungsträger verbleibt, also nicht an der Dichtfläche des Anschlussflansches zurückbleibt, von wo sie dann umständlich manuell entfernt werden müsste. Außerdem soll ein geeigneter Filtereinsatz geschaffen werden.

Die Lösung des den Filter betreffenden Teils der Aufgabe gelingt erfindungsgemäß mit einem Filter der eingangs genannten Art, der dadurch gekennzeichnet ist, dass die Dichtung ein Dichtring mit in einem unbelasteten Ausgangszustand rechteckigem Querschnitt ist, dass am Außenumfang des Dichtungsträgers radiale Eingriffskonturen angeordnet sind, dass beim Montieren des Gehäuses die Dichtung unter axialer Verkürzung und radialer Ausdehnung an ihrem Innenumfang in einen formschlüssigen gegenseitigen, für ein Mitnehmen der Dichtung bei der Demontage des Filters zum Zweck eines Filtereinsatzwechsels notwendigen axialen Kräfte übertragenden Eingriff mit den radialen Eingriffskonturen bringbar und bleibend umformbar ist und dass auf dem Außenumfang des Dichtungsträgers in dessen Axialrichtung voneinander beabstandete, einen axialen Bewegungsspielraum der Dichtung auf dem Dichtungsträger auf ein vorgebbares Maß begrenzende Anschläge angeordnet sind.

Mit der Erfindung wird vorteilhaft auf einfache Art und Weise für einen ausreichend sicheren axialen Halt der Dichtung am Dichtungsträger gesorgt, sodass bei einem Filtereinsatzwechsel ohne besonderen zusätzlichen Handhabungsaufwand die Dichtung zuverlässig mit ausgewechselt wird. Die Dichtung hat dabei eine einfache Ausgangsform und kann daher kostengünstig gefertigt werden. Ihre besondere, für den axialen Halt auf dem Dichtungsträger sorgende Form erhält die Dichtung erst nach ihrem Einbau durch die im eingebauten Zustand erfolgende Umformung, die sich bei der Demontage des Filters zum Zweck des Wechsels des Filtereinsatzes nicht mehr zurückbildet. Somit wird während der Einsatzzeit des Filtereinsatzes zwischen der Dichtung und dem Dichtungsträger ein formschlüssiger gegenseitiger Eingriff gebildet, der sich nicht zurückbildet und der in der Lage ist, die für ein zuverlässiges Mitnehmen der Dichtung bei der Demontage des Filters zum Zweck des Filtereinsatzwechsels notwendigen axialen Kräfte zu übertragen. Dadurch, dass auf dem Au-ßenumfang des Dichtungsträgers in dessen Axialrichtung voneinander beabstandete, einen axialen Bewegungsspielraum der Dichtung auf dem Dichtungsträger auf ein vorgebbares Maß begrenzende Anschläge angeordnet sind, wird erreicht, dass bei der Montage des Filters die Dichtung zuverlässig auf dem Dichtungsträger gehalten wird.

Vorzugsweise ist die Dichtung ein extrudierter Dichtring aus einem Elastomer.

Das Elastomer ist bevorzugt ein Ethylencrylat- oder Polyacrylat-Kautschuk oder ein Nitril-Kautschuk oder ein Fluor-Silikon-Kautschuk oder ein Ethylen-Propylen-Dien-Kautschuk oder ein Fluor-Kautschuk mit einer Härte zwischen 60 und 70 Shore A.

Vorteilhaft ist dabei zumindest einer der Anschläge durch die radialen Eingriffskonturen gebildet.

Der Außenumfang des Dichtungsträgers kann zur Erzielung der gewünschten Eigenschaften und Funktionen unterschiedlich gestaltet sein.

Eine Ausgestaltung sieht vor, dass auf dem Außenumfang des Dichtungsträgers eine oder mehrere umlaufende, in Umfangsrichtung durchgehende oder abschnittsweise ausgebildete Rippen oder Nuten ausgebildet sind.

Eine andere Ausgestaltung sieht vor, dass auf dem Außenumfang des Dichtungsträgers eine oder mehrere umlaufende, in Umfangsrichtung durchgehende oder abschnittsweise ausgebildete Reihen von Löchern oder Sacklöchern oder Nasen oder Nocken ausgebildet sind.

Gemäß einer weiteren Ausgestaltung sind auf dem Außenumfang des Dichtungsträgers eine an einem axialen Rand oder zwei an beiden axialen Rändern des Dichtungsträgers umlaufende, in Umfangsrichtung durchgehende oder abschnittsweise ausgebildete Reihen von nach axial außen offenen Einschnitten oder Ausnehmungen ausgebildet.

In einer noch weiteren Ausgestaltung sind an dem Dichtungsträger in seinem dem Filtereinsatz zugewandten axialen Randbereich axial in Richtung zum Gehäuseinneren weisende Hakenarme angeordnet, die mittels Kontakts mit dem Innenumfang des Gehäuses bei dessen Montage radial nach innen hin rückstellbar einfederbar sind.

Zur Lösung des zweiten Teils der Aufgabe wird ein Filtereinsatz zur Verwendung in einem Filter nach einem der Ansprüche 1 bis 8 vorgeschlagen, wobei der Filtereinsatz durch einen hohlzylindrischen, stirnseitig von zwei Endscheiben eingefassten Filterstoffkörper gebildet ist und wobei eine Dichtung auf dem Außenumfang eines einen Teil des Filtereinsatzes bildenden umlaufenden Dichtungsträgers angeordnet ist, wobei der Filtereinsatz dadurch gekennzeichnet ist, dass die Dichtung ein Dichtring mit in einem unbelasteten Ausgangszustand rechteckigem Querschnitt ist, dass am Außenumfang des Dichtungsträgers radiale Eingriffskonturen angeordnet sind, dass beim Montieren des Gehäuses des Filters die Dichtung unter axialer Verkürzung und radialer Ausdehnung an ihrem Innenumfang in einen formschlüssigen gegenseitigen, für ein Mitnehmen der Dichtung bei der Demontage des Filters zum Zweck des Filtereinsatzwechsels notwendigen axialen Kräfte übertragenden Eingriff mit den radialen Eingriffskonturen bringbar und bleibend umformbar ist und dass auf dem Außenumfang des Dichtungsträgers in dessen Axialrichtung voneinander beabstandete, einen axialen Bewegungsspielraum der Dichtung auf dem Dichtungsträger auf ein vorgebbares Maß begrenzende Anschläge angeordnet sind.

Hiermit wird ein speziell für den zuvor beschriebenen Filter passender und mit diesem zur Erzielung der gewünschten Eigenschaften und Funktionen zusammenwirkender Filtereinsatz geschaffen.

Vorteilhafte Ausgestaltungen und Weiterbildungen des erfindungsgemäßen Filtereinsatzes sind in den Ansprüchen 10 bis 16 angegeben.

Die Vorteile der Erfindung können folgendermaßen zusammengefasst werden:
- aus einer kostengünstigen extrudierten Vierkant- oder Rechteckdichtung wird im Betrieb eine Profildichtung;
- die Dichtung ist bei der Wartung, wenn der Filtereinsatz getauscht wird, verliersicher;
- da Elastomere praktisch nicht kompressibel sind, bleiben sie unter Belastung volumenkonstant, so dass sich die Dichtung bei axialer Komprimierung radial ausdehnt;
- da die Dichtung im Einbauzustand axial beidseitig und radial außen durch das Gehäuse und durch die Dichtfläche des Filteranschlussflansches begrenzt wird, geht das Material der Dichtung den Weg des geringsten Widerstandes und legt sich zwangsläufig an die radiale Eingriffskontur des Dichtungsträgers formschlüssig an;
- bei der Wartung des Filters sorgt der Eingriff zwischen der radialen Eingriffskontur und der Dichtung dafür, dass die Dichtung am Dichtungsträger und somit am Filtereinsatz verliersicher angebracht bleibt und nicht an der Dichtfläche des Anschlussflansches haftend zurückbleibt,
- für die radiale Eingriffskontur am Dichtungsträgers gibt es eine große Formenfreiheit, zum Beispiel erhabene Formen, wie ein oder mehrere umlaufende Rippen oder segmentweise Rippenteile oder einzelne Noppen oder Noppenreihen, oder eingetiefte Formen, wie umlaufende oder segmentweise Nuten oder eine oder mehrere Reihen von Löchern oder Hinterschnitte. Dabei können die Eingriffskonturen an und/oder in der Außenumfangsfläche oder am oder im axial oberen und/oder unteren Rand des Dichtungsträgers angeordnet sein.

Im Folgenden werden Ausführungsbeispiele der Erfindung anhand einer Zeichnung erläutert. Die Figuren der Zeichnung zeigen:
- Figur 1: einen Filtereinsatz mit Dichtungsträger und Dichtung, in einer Ansicht schräg von unten,
- Figur 2: ein Detail aus dem linken unteren Endbereich des Filtereinsatzes aus Figur 1, im Längsschnitt in einer ersten Schnittebene,
- Figur 3: einen Ausschnitt aus einem Filter in einem Detail, mit dem linken unteren Endbereich des Filtereinsatzes aus Figur 2 zusammen mit einem Teil eines Filtergehäuses, während eines Anbauens des Filters an einen Anbauflansch, ebenfalls im Längsschnitt,
- Figur 4: das Detail aus Figur 3, nach dem Montieren des Filters an dem Filteranschlussflansch, im Längsschnitt,
- Figur 5: das Detail aus Figur 4, im Längsschnitt entlang einer gegenüber Figur 4 verdrehten, zweiten Schnittebene,
- Figur 6: den Filtereinsatz nach einem Entnehmen aus dem Gehäuse des Filters, in Ansicht schräg von unten,
- Figur 7: ein Detail aus dem linken unteren Endbereich des Filtereinsatzes aus Figur 6, im Längsschnitt, und die
- Figuren 8 bis 13: den Dichtungsträger in verschiedenen Ausführungen, jeweils in Ansicht und in zwei senkrecht zueinander verlaufenden Schnitten.

In der folgenden Figurenbeschreibung sind gleiche Teile in den verschiedenen Zeichnungsfiguren stets mit den gleichen Bezugszeichen versehen, sodass nicht zu jeder Zeichnungsfigur alle Bezugszeichen erneut erläutert werden müssen.

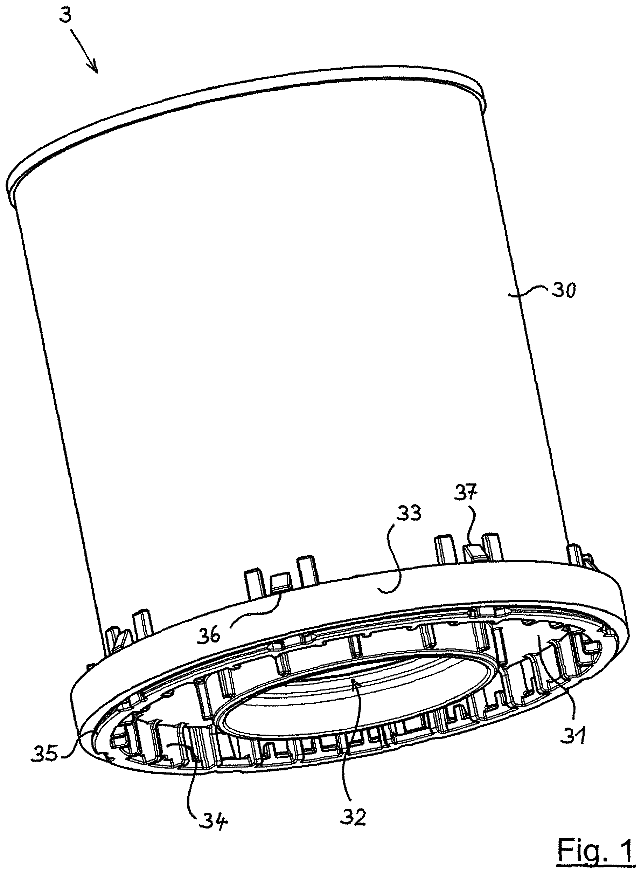

Figur 1 der Zeichnung zeigt einen Filtereinsatz 2 mit Dichtungsträger 34 und Dichtung 33, in einer Ansicht schräg von unten. Der Filtereinsatz 3 besteht aus einem hohlzylindrischen Filterstoffkörper 30, der zumindest an seiner in Figur 1 nach unten weisenden Stirnseite mit einer Endscheibe 31 mit einer zentralen Durchbrechung 32 abgedeckt ist. Im gezeigten Beispiel ist die zweite, nach oben weisende Stirnseite des Filterstoffkörpers 30 mit einer weiteren Endscheibe abgedeckt. Mit der Durchbrechung 32 in der Endscheibe 31 kann der Filtereinsatz 3 in an sich bekannter Art und Weise auf einen Anschlussstutzen eines zugehörigen Filters aufgesteckt werden.

Einstückig mit der unteren Endscheibe 31 ist der Dichtungsträger 34 ausgebildet, der an seinem Außenumfang eine umlaufende Fläche aufweist, auf der die Dichtung 33 angeordnet ist. Die Dichtung 33 hat hier in ihrem unbelasteten Ausgangszustand die Form eines im Querschnitt rechteckigen Dichtrings und besteht beispielsweise aus einem extrudierten Elastomer.

Am unteren Rand des Dichtungsträgers 34 ist eine nach außen weisende, radiale Eingriffskontur 35 in Form einer Rippe oder eines Wulstes angeformt. Vom oberen Rand des Dichtungsträgers 34 gehen in Umfangsrichtung gesehen in regelmäßigen Abständen Hakenarme 37 nach oben hin, das heißt in Richtung zum Filterstoffkörper 30, aus, die radial außen vom Außenumfang des Filterstoffkörpers 30 liegen. Die Hakenarme 37 bildenden an ihrem freien Ende jeweils einen nasenförmigen axialen Anschlag 36. Die Anschläge 36 und die Eingriffskonturen 35 begrenzen zusammen den axialen Bewegungsspielraum der Dichtung 33 auf dem Dichtungsträger 34 und verhindern insbesondere ein Abrutschen oder Abschieben der Dichtung 33 vom Dichtungsträger 34 vor dem Einbauen des Filtereinsatzes 3 in ein zugehöriges, in Figur 1 nicht dargestelltes Gehäuse.

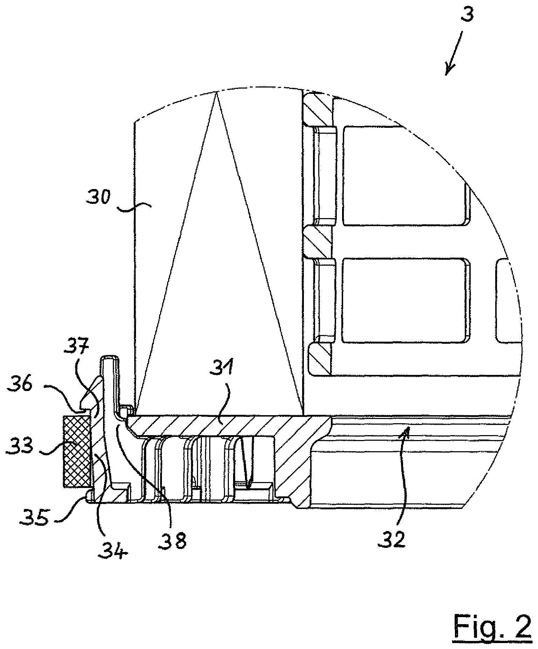

Figur 2 zeigt ein Detail aus dem linken unteren Endbereich des Filtereinsatzes 3 aus Figur 1, im Längsschnitt in einer ersten Schnittebene. Unten in Figur 2 ist ein Teil der Endscheibe 31 mit der zentralen Durchbrechung 32 sichtbar. Von der Endscheibe 31 geht nach oben hin der Filterstoffkörper 30 aus, in dem in bekannter Weise ein Stützgitter angeordnet ist.

Radial außen von der eigentlichen Endscheibe 31 verläuft der einstückig mit dieser ausgebildete Dichtungsträger 34, auf dessen Außenumfang der hier noch seine Ausgangsform aufweisende, im Querschnitt rechteckige Dichtring als Dichtung 33 angeordnet ist. Ein unerwünschtes Verschieben der Dichtung 33 auf dem Dichtungsträger 34 wird in diesem Zustand durch die unten an den Dichtungsträger 34 angeformte radiale Eingriffskontur 35 und den hier im Schnitt sichtbaren Hakenarm 37 mit dem axial oberen Anschlag 36 verhindert.

Zwischen der Endscheibe 31 und dem Dichtungsträger 34 sind Durchlässe 38 vorgesehen, die im Betrieb des Filtereinsatzes 3 ein Zuströmen einer zu reinigenden Flüssigkeit von unten her zum Außenumfang des Filterstoffkörpers 30 ermöglichen.

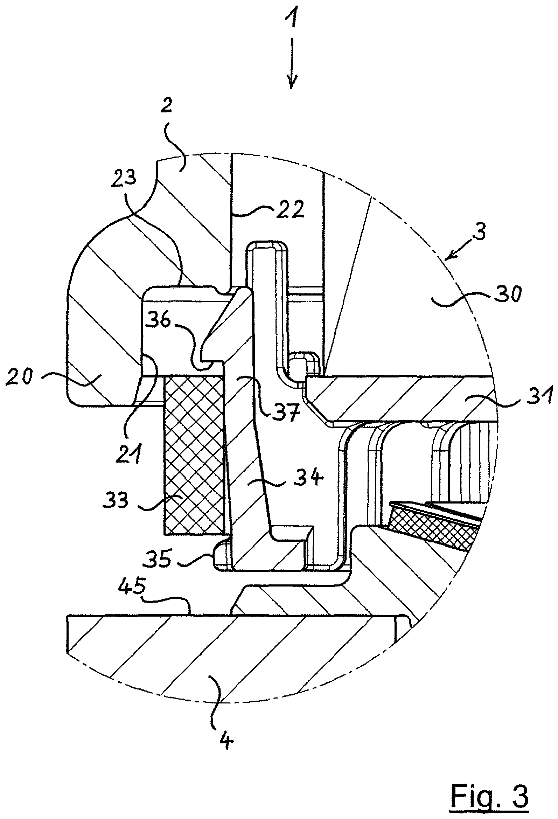

Figur 3 zeigt einen Ausschnitt aus einem Filter 1 in einem Detail, mit dem linken unteren Endbereich des Filtereinsatzes 3 aus Figur 2 zusammen mit einem Teil eines Filtergehäuses 2, während eines Anbauens des Filters 1 an einen Anschlussflansch 4, ebenfalls im Längsschnitt. Der Filtereinsatz 3 befindet sich hier schon in seiner Einbauposition relativ zu dem Anschlussflansch 4, während das Gehäuse sich noch in einem gewissen Abstand von dem Anschlussflansch 4 und einer dortigen Dichtfläche 45 befindet. Auch die auf dem Dichtungsträger 34 angeordnete Dichtung 33 besitzt hier an ihrer in Richtung zum Anschlussflansch 4 weisenden Stirnseite noch einen Abstand von der zugehörigen Dichtfläche 45 des Anschlussflansches 4. Die Dichtung 33 auf dem Dichtungsträger 34 ist somit hier noch unbelastet und besitzt noch ihre im Querschnitt rechteckige Ausgangsform.

Das Gehäuse 2 des Filters 1 besitzt einen in seinem Durchmesser erweiterten freien Rand 20 mit einem Innenumfang 21. Oberhalb des freien Randes 20 hat das Gehäuse 2 eine Durchmesserstufe 23 und darüber einen etwas kleineren Durchmesser und besitzt dort einen Innenumfang 22.

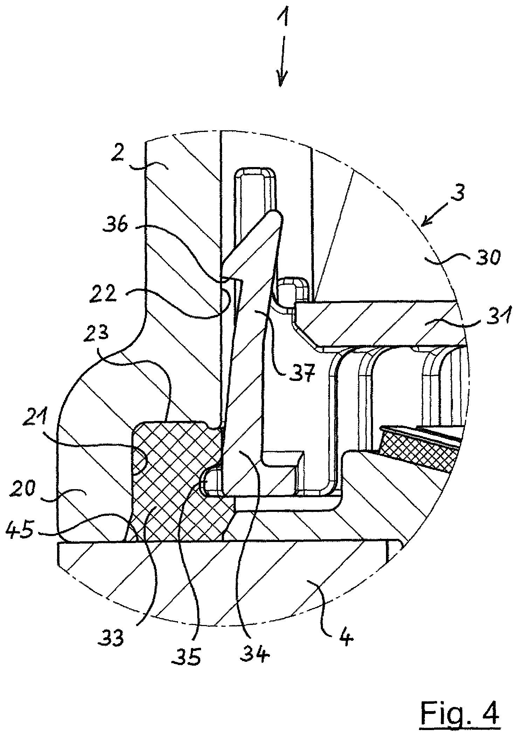

Figur 4 zeigt das Detail aus Figur 3, nach dem Montieren des Filters 1 an dem Filteranschlussflansch 4, im Längsschnitt. Das Gehäuse 2 hat nun ebenfalls seine endgültige Montageposition relativ zu dem Anschlussflansch 4 erreicht, in der das Gehäuse 2 mit der Stirnfläche seines freien Randes 20 an dem Anschlussflansch 4 anliegt. Durch die Durchmesserstufe 23 ist die Dichtung 33 auf dem Dichtungsträger 34 axial in Richtung zur Dichtfläche 45 des Anschlussflansches 4 verschoben und unter axialer Verkürzung an die Dichtfläche 35 angepresst. Aufgrund eines im Wesentlichen hydraulischen Verhaltens des Materials, wie Elastomer, der Dichtung 33 führt deren axiale Verkürzung zu einer Ausdehnung der Dichtung 33 in Radialrichtung. Eine Ausdehnung radial nach außen wird durch den Innenumfang 21 des freien Randes 20 des Gehäuses 2 begrenzt, so dass praktisch nur eine Ausdehnung überwiegend in Richtung nach radial innen möglich ist und erfolgt, bei der sich das Material der Dichtung 33 axial oberhalb und unterhalb an der radialen, wulstförmigen Eingriffskontur 35 vorbei radial nach innen bewegt.

Da das Gehäuse 2 mit Filtereinsatz 3 und Dichtung 33 im normalen Betrieb für eine längere Zeit, in der Praxis üblicherweise mehrere oder viele Monate, in der in Figur 4 gezeigten Stellung verbleibt, wird die in Figur 4 sichtbare Umrissform der Dichtung 33 dauerhaft in diese eingeprägt.

Der in Figur 4 sichtbare Hakenarm 37 ist durch Kontakt mit dem Innenumfang 22 des Gehäuses 2 in Radialrichtung nach innen eingefedert, wodurch sein nasenförmig nach radial außen weisender Anschlag 36 mit einer gewissen Reibungskraft am Innenumfang 22 des Gehäuses 2 anliegt. Diese Reibungskraft sorgt dafür, dass bei einer Demontage des Filters 1 mit einem Entfernen des Gehäuses 2 von dem Anschlussflansch 4 der Filtereinsatz 3 vom Gehäuse 2 mitgenommen wird. Gleichgültig sorgt die radiale Eingriffskontur 35 für ein zuverlässiges Mitnehmen der Dichtung 33 beim Entfernen von Gehäuse 2 und Filtereinsatz 3 vom Anschlussflansch 4.

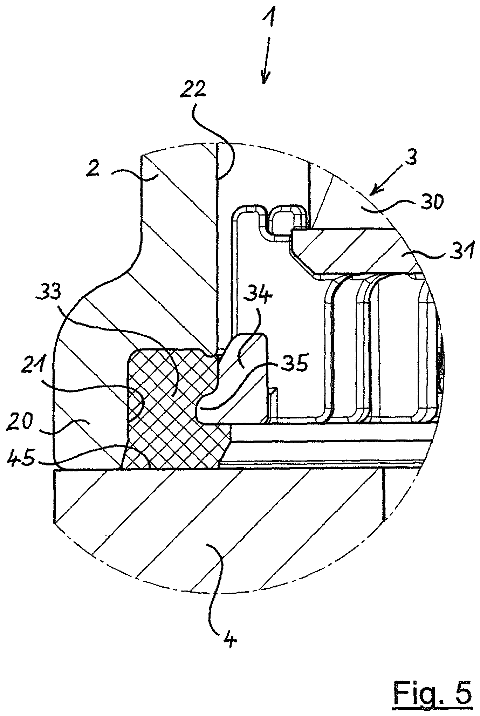

Figur 5 zeigt das Detail aus Figur 4, im Längsschnitt entlang einer gegenüber Figur 4 verdrehten, zweiten Schnittebene, die nicht durch einen der Hakenarme 37 verläuft. Auch hier ragt die radiale Eingriffskontur 35 in den Innenumfang der Dichtung 33 hinein, um diese bei einem späteren Demontieren des Filters 1 mit dem Filtereinsatz 3 in Axialrichtung zuverlässig vom Anschlussflansch 4 weg mitzunehmen.

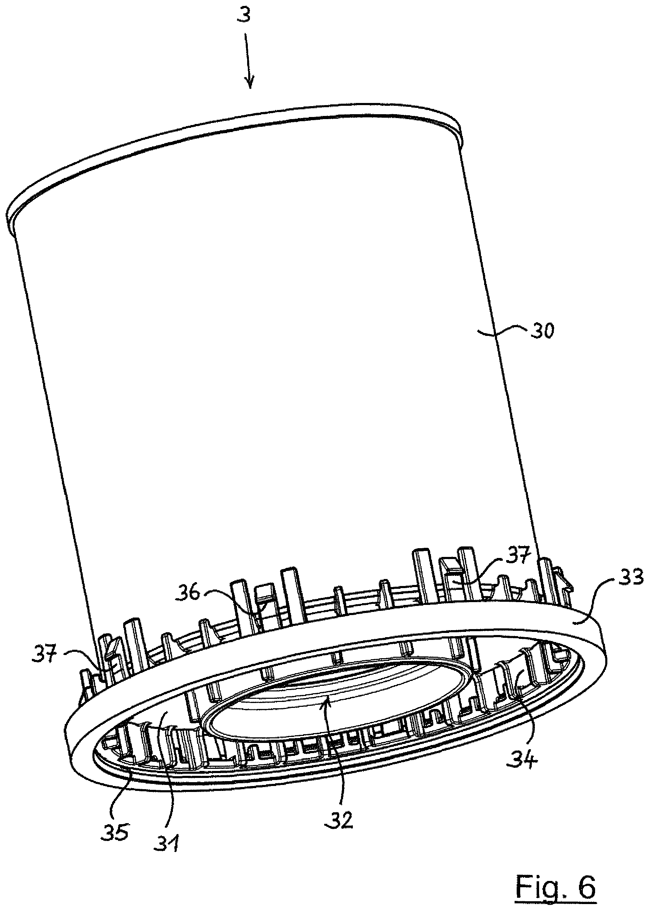

Figur 6 zeigt den demontierten Filtereinsatz 3 nach einem Entnehmen aus dem Gehäuse 2 des Filters 1, in Ansicht schräg von unten. Unterschiedlich gegenüber der Ausgangssituation gemäß Figur 1 ist nun, dass die Dichtung 33 in Axialrichtung weiter unten auf dem Dichtungsträger 34 sitzt und dass die radiale Eingriffskontur 35, die im Zustand gemäß Figur 1 noch axial unterhalb der Dichtung 33 lag, nun in Eingriff mit dem Innenumfang der Dichtung 33 steht. Entsprechend haben die Anschläge 36 an den Hakenarmen 37 nun einen größeren axialen Abstand von der oberen Stirnseite der Dichtung 33.

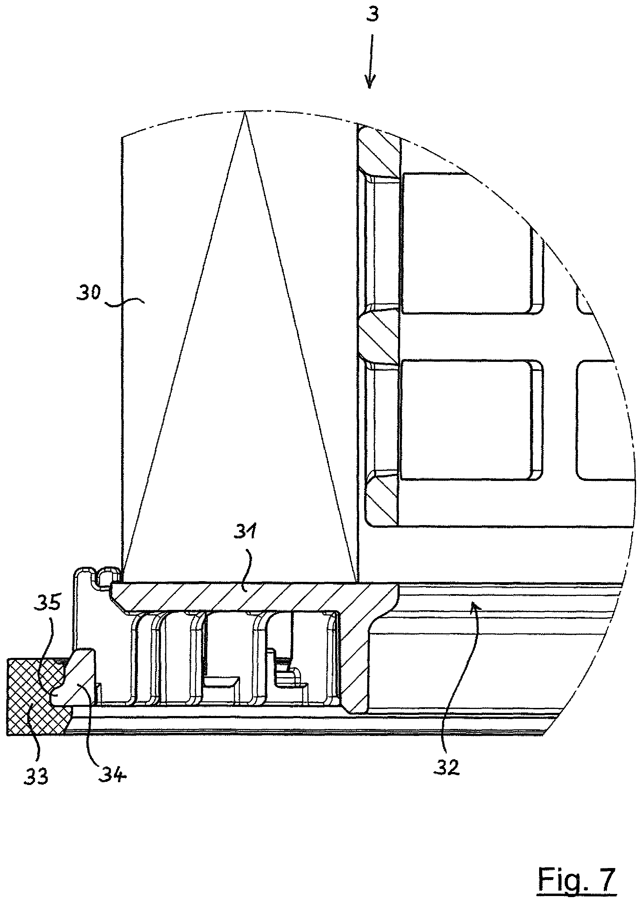

Figur 7 zeigt ein Detail aus dem linken unteren Endbereich des ausgebauten Filtereinsatzes 3 aus Figur 6, im Längsschnitt. Die während ihrer Einsatzzeit umgeformte Dichtung 33 behält nach dem Demontieren des Filters 1 ihre umgeformte Form bei, in welcher die radiale Eingriffskontur 35 in Radialrichtung in den Innenumfang der Dichtung 33 hineinragt und eingreift. Damit ist gewährleistet, dass beim Ausbauen des Filtereinsatzes 3 die Dichtung 33 am Filtereinsatz 3, genauer am Dichtungsträger 34 des Filtereinsatzes 3, verbleibt, ohne dass dafür eine schon in ihrem Ausgangszustand eine aufwändig herzustellende, komplizierte Querschnittsform aufweisende Dichtung 33 benötigt wird.

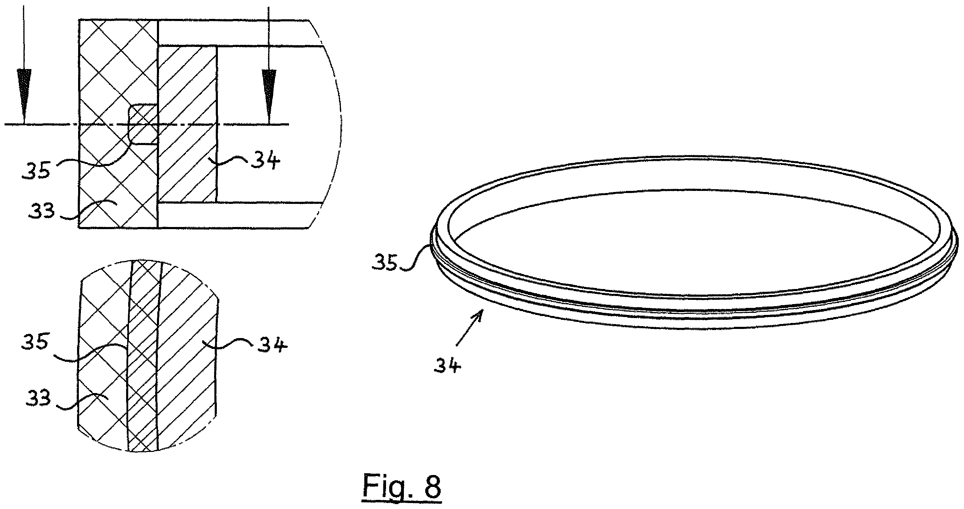

Die Figuren 8 bis 13 zeigen den Dichtungsträger 34 mit verschiedenen Ausführungen seiner radialen Eingriffskonturen 35, jeweils in Ansicht, in einem oder zwei Teil-Querschnitten und einem Teil-Längsschnitt, wobei in den Teilschnitten jeweils auch die Dichtung 33, in ihrem entspannten Ausgangszustand, mit eingezeichnet ist.

In Figur 8 sind die radialen Eingriffskonturen 35 am Außenumfang des Dichtungsträgers 34 durch eine umlaufende, in Umfangsrichtung durchgehende Rippe ausgebildet, die auch schon im Ausgangszustand der Dichtung 33 in deren Innenumfang hineinragt und so die Dichtung 33 von Anfang an sicher auf dem Dichtungsträger 34 hält.

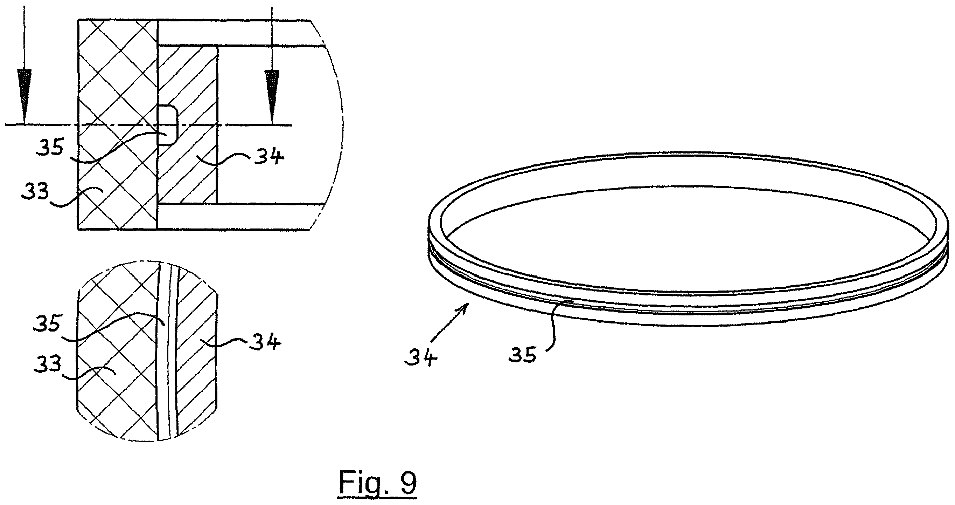

In Figur 9 sind die radialen Eingriffskonturen 35 am Außenumfang des Dichtungsträgers 34 durch eine umlaufende, in Umfangsrichtung durchgehende Nut ausgebildet, in welche die Dichtung in ihrem entspannten Ausgangszustand noch nicht eingreift; der gegenseitige Eingriff entsteht hier erst beim Montieren des Filters, wie weiter oben erläutert.

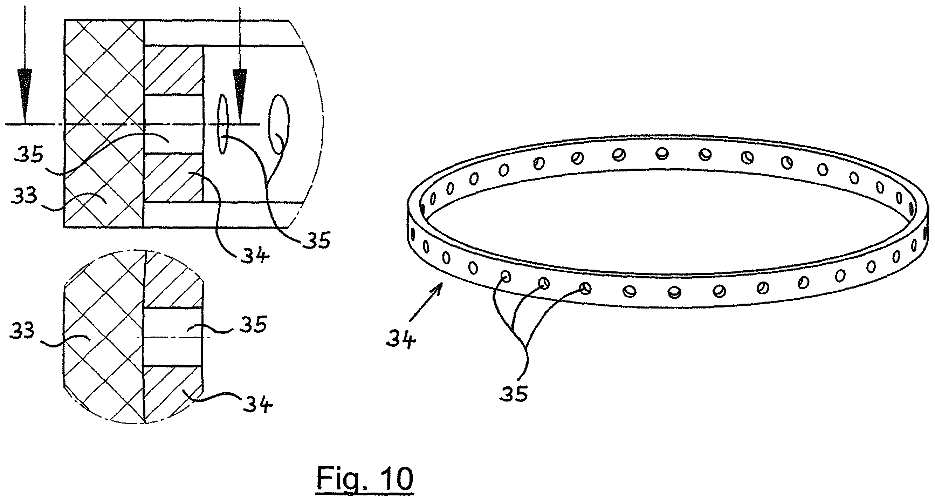

In Figur 10 sind die radialen Eingriffskonturen 35 am Außenumfang des Dichtungsträgers 34 durch eine umlaufende Reihe von radial durch den Dichtungsträger 34 verlaufenden, in Umfangsrichtung voneinander beabstandeten Löchern ausgebildet.

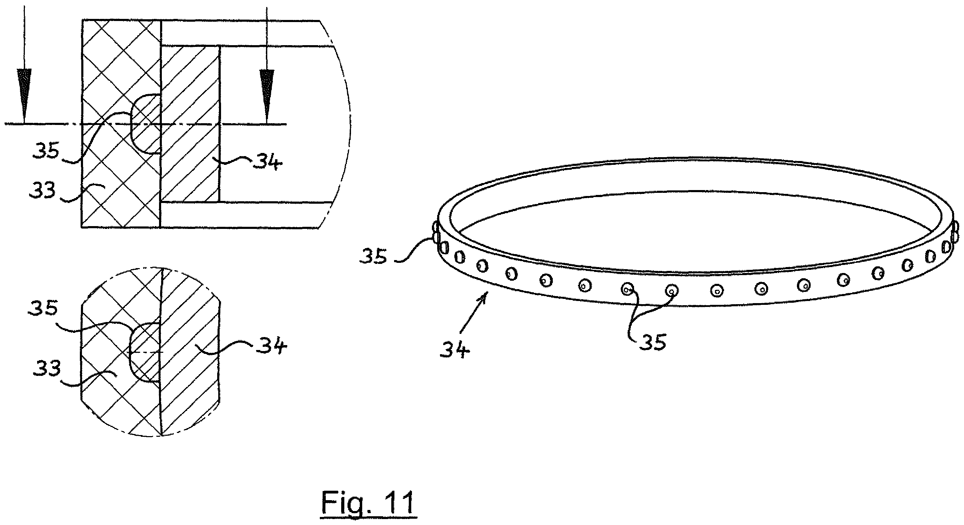

In Figur 11 sind die radialen Eingriffskonturen 35 am Außenumfang des Dichtungsträgers 34 durch eine umlaufende Reihe von radial nach außen vorragenden, in Umfangsrichtung voneinander beabstandeten Nocken oder Nasen mit jeweils rundem Umriss ausgebildet.

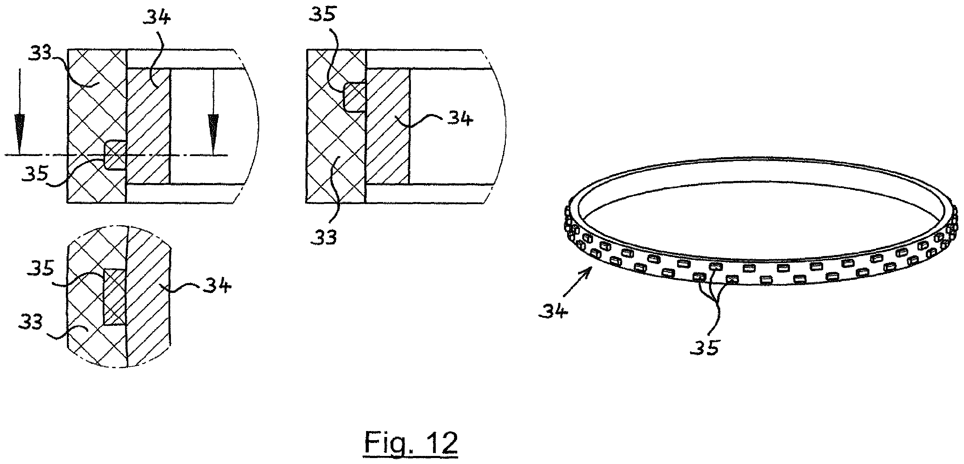

In Figur 12 sind die radialen Eingriffskonturen 35 am Außenumfang des Dichtungsträgers 34 durch zwei parallel zueinander umlaufende Reihen von radial nach außen vorragenden, in Umfangsrichtung voneinander beabstandeten Nocken oder Nasen mit jeweils rechteckigem Umriss ausgebildet.

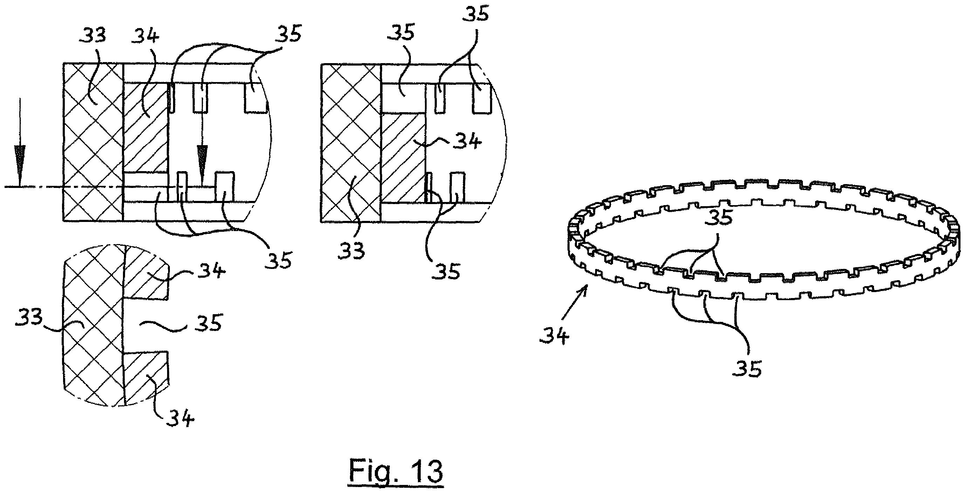

In Figur 13 schließlich sind die radialen Eingriffskonturen 35 am Außenumfang des Dichtungsträgers 34 durch zwei an beiden axialen Rändern des Dichtungsträgers 34 umlaufende Reihen von nach radial außen und axial außen offenen Einschnitten oder Ausnehmungen ausgebildet.

Alle vorstehend anhand der Figuren 8 bis 13 beispielhaft beschriebenen radialen Eingriffskonturen 35 haben die gewünschte Eigenschaft, spätestens bei der Montage des Filters derart in Eingriff mit der Dichtung 33 zu treten, dass bei einer Demontage des Filters mit Entnehmen des Filtereinsatzes aus dem Gehäuse die Dichtung 33 zuverlässig auf dem Dichtungsträger 34 gehalten und mit dem Filtereinsatz und dem Dichtungsträger 34 mitgenommen wird.

Die Figuren 8 bis 13 zeigen lediglich einige geeignete Ausführungen des Dichtungsträgers 34; die Nasen, Nocken, Löcher oder Ausnehmungen oder sonstigen Eingriffskonturen auf oder in dem Dichtungsträger 34 können jegliche Form oder Kontur haben, die geeignet ist, die Dichtung 33 auf dem Dichtungsträger 34 zu halten.

**Bezugszeichenliste:**

| Zeichen | Bezeichnung |
|---|---|
| 1 | Filter |
| | |
| 2 | Gehäuse |
| 20 | freier Rand von 2 |
| 21 | Innenumfang von 20 |
| 22 | Innenumfang von 2 |
| 23 | Durchmesserstufe |
| | |
| 3 | Filtereinsatz |
| 30 | Filterstoffkörper |
| 31 | Endscheibe |
| 32 | zentrale Durchbrechung in 31 |
| 33 | Dichtung an 3 |
| 34 | Dichtungsträger an 3 |
| 35 | radiale Eingriffskonturen an 34 |
| 36 | axiale Anschläge an 34 |
| 37 | Hakenarme an 34 |
| 38 | Durchlässe |
| | |
| 4 | Anschlussflansch |
| 45 | Dichtfläche an 4 für 33 |

## Patentansprüche

1. Filter (1), der an einen Anschlussflansch (4) anbaubar ist, wobei der Filter (1) einen austauschbaren Filtereinsatz (3) mit einem hohlzylindrischen, stirnseitig von zwei Endscheiben (31) eingefassten Filterstoffkörper (30) aufweist, wobei der Filter (1) ein becherförmiges Gehäuse (2) aufweist, welches an seinem freien Rand (20) mittels einer umlaufenden Dichtung (33) im montierten Zustand gegen eine Dichtfläche (45) des Anschlussflansches (4) abdichtbar ist, und wobei die Dichtung (33) auf dem Außenumfang eines einen Teil des Filtereinsatzes (3) bildenden umlaufenden Dichtungsträgers (34) angeordnet ist,
**dadurch gekennzeichnet,**
**dass** die Dichtung (33) ein Dichtring mit in einem unbelasteten Ausgangszustand rechteckigem Querschnitt ist,
**dass** am Außenumfang des Dichtungsträgers (34) radiale Eingriffskonturen (35) angeordnet sind,
**dass** beim Montieren des Gehäuses (2) die Dichtung (33) unter axialer Verkürzung und radialer Ausdehnung an ihrem Innenumfang in einen formschlüssigen gegenseitigen, für ein Mitnehmen der Dichtung (33) bei der Demontage des Filters (1) zum Zweck eines Filtereinsatzwechsels notwendigen axialen Kräfte übertragenden Eingriff mit den radialen Eingriffskonturen (35) bringbar und bleibend umformbar ist und
**dass** auf dem Außenumfang des Dichtungsträgers (34) in dessen Axialrichtung voneinander beabstandete, einen axialen Bewegungsspielraum der Dichtung (33) auf dem Dichtungsträger (34) auf ein vorgebbares Maß begrenzende Anschläge (36) angeordnet sind.

2. Filter nach Anspruch 1, **dadurch gekennzeichnet, dass** die Dichtung (33) ein extrudierter Dichtring aus einem Elastomer ist.

3. Filter nach Anspruch 2, **dadurch gekennzeichnet, dass** das Elastomer ein Ethylenacrylat- oder Polyacrylat-Kautschuk oder ein Nitril-Kautschuk oder ein Fluor-Silikon-Kautschuk oder ein Ethylen-Propylen-Dien-Kautschuk oder ein Fluor-Kautschuk mit einer Härte zwischen 60 und 70 Shore A ist.

4. Filter nach einem der Ansprüche 1 bis 3, **dadurch gekennzeichnet, dass** zumindest einer der Anschläge (36) durch die radialen Eingriffskonturen (35) gebildet ist.

5. Filter nach einem der Ansprüche 1 bis 4, **dadurch gekennzeichnet, dass** auf dem Außenumfang des Dichtungsträgers (34) eine oder mehrere umlaufende, in Umfangsrichtung durchgehende oder abschnittsweise ausgebildete Rippen oder Nuten ausgebildet sind.

6. Filter nach einem der Ansprüche 1 bis 5, **dadurch gekennzeichnet, dass** auf dem Außenumfang des Dichtungsträgers (34) eine oder mehrere umlaufende, in Umfangsrichtung durchgehende oder abschnittsweise ausgebildete Reihen von Löchern oder Sacklöchern oder Nasen oder Nocken ausgebildet sind.

7. Filter nach einem der Ansprüche 1 bis 6, **dadurch gekennzeichnet, dass** auf dem Außenumfang des Dichtungsträgers (34) eine an einem axialen Rand oder zwei an beiden axialen Rändern des Dichtungsträgers (34) umlaufende, in Umfangsrichtung durchgehende oder abschnittsweise ausgebildete Reihen von nach axial außen offenen Einschnitten oder Ausnehmungen ausgebildet sind.

8. Filter nach einem der Ansprüche 1 bis 7, **dadurch gekennzeichnet, dass** an dem Dichtungsträger (34) in seinem dem Filtereinsatz (3) zugewandten axialen Randbereich axial in Richtung zum Gehäuseinneren weisende Hakenarme (37) angeordnet sind, die mittels Kontakts mit dem Innenumfang (22) des Gehäuses (2) bei dessen Montage radial nach innen hin rückstellbar einfederbar sind.

9. Filtereinsatz (3) zur Verwendung in einem Filter (1) nach einem der Ansprüche 1 bis 8, wobei der Filtereinsatz (3) durch einen hohlzylindrischen, stirnseitig von zwei Endscheiben (31) eingefassten Filterstoffkörper (30) gebildet ist und wobei eine Dichtung (33) auf dem Außenumfang eines einen Teil des Filtereinsatzes (3) bildenden umlaufenden Dichtungsträgers (34) angeordnet ist,
**dadurch gekennzeichnet,**
**dass** die Dichtung (33) ein Dichtring mit in einem unbelasteten Ausgangszustand rechteckigem Querschnitt ist,
**dass** am Außenumfang des Dichtungsträgers (34) radiale Eingriffskonturen (35) angeordnet sind,
**dass** beim Montieren des Gehäuses (2) des Filters (1) die Dichtung (33) unter axialer Verkürzung und radialer Ausdehnung an ihrem Innenumfang in einen formschlüssigen gegenseitigen, für ein Mitnehmen der Dichtung (33) bei der Demontage des Filters (1) zum Zweck eines Filtereinsatzwechsels notwendigen axialen Kräfte übertragenden Eingriff mit den radialen Eingriffskonturen (35) bringbar und bleibend umformbar ist und
**dass** auf dem Außenumfang des Dichtungsträgers (34) in dessen Axialrichtung voneinander beabstandete, einen axialen Bewegungsspielraum der Dichtung (33) auf dem Dichtungsträger (34) auf ein vorgebbares Maß begrenzende Anschläge (36) angeordnet sind.

10. Filtereinsatz nach Anspruch 9, **dadurch gekennzeichnet, dass** die Dichtung (33) ein extrudierter Dichtring aus einem Elastomer ist.

11. Filtereinsatz nach Anspruch 10, **dadurch gekennzeichnet, dass** das Elastomer ein Ethylenacrylat- oder Polyacrylat-Kautschuk oder ein Nitril-Kautschuk oder ein Fluor-Silikon-Kautschuk oder ein Ethylen-Propylen-Dien-Kautschuk oder ein Fluor-Kautschuk mit einer Härte zwischen 60 und 70 Shore A ist.

12. Filtereinsatz nach einem der Ansprüche 9 bis 11, **dadurch gekennzeichnet, dass** zumindest einer der Anschläge (36) durch die radialen Eingriffskonturen (35) gebildet ist.

13. Filtereinsatz nach einem der Ansprüche 9 bis 12, **dadurch gekennzeichnet, dass** auf dem Außenumfang des Dichtungsträgers (34) eine oder mehrere umlaufende, in Umfangsrichtung durchgehende oder abschnittsweise ausgebildete Nuten oder Rippen ausgebildet sind.

14. Filtereinsatz nach einem der Ansprüche 9 bis 13, **dadurch gekennzeichnet, dass** auf dem Außenumfang des Dichtungsträgers (34) eine oder mehrere umlaufende, in Umfangsrichtung durchgehende oder abschnittsweise ausgebildete Reihen von Löchern oder Sacklöchern oder Nasen oder Nocken ausgebildet sind.

15. Filtereinsatz nach einem der Ansprüche 9 bis 14, **dadurch gekennzeichnet, dass** auf dem Außenumfang des Dichtungsträgers (34) eine an einem axialen Rand oder zwei an beiden axialen Rändern des Dichtungsträgers (34) umlaufende, in Umfangsrichtung durchgehende oder abschnittsweise ausgebildete Reihen von nach axial außen offenen Einschnitten oder Ausnehmungen ausgebildet sind.

16. Filtereinsatz nach einem der Ansprüche 9 bis 15, **dadurch gekennzeichnet, dass** an dem Dichtungsträger (34) in seinem dem Filtereinsatz (3) zugewandten axialen Randbereich axial in Richtung zum Gehäuseinneren weisende Hakenarme (37) angeordnet sind, die mittels Kontakts mit dem Innenumfang (22) des Gehäuses (2) bei dessen Montage radial nach innen hin rückstellbar einfederbar sind.

## Claims

1. A filter (1) which can be attached to a connection flange (4), wherein the filter (1) comprises an exchangeable filter insert (3) with a hollow-cylindrical filter material body (30) that is enclosed on the end faces by two end discs (31), wherein the filter (1) has a cup-shaped housing (2) that when in the mounted state is sealable at its free edge (20) by a circumferential seal (33) against a sealing surface (45) of the connection flange (4), and wherein the seal (33) is arranged on the outer periphery of a circumferential seal support (34) forming a part of the filter insert (3),
**characterised in**
**that** the seal (33) is a sealing ring with a rectangular cross section when in an initial, unloaded state,
**that** radial engagement contours (35) are arranged on the outer periphery of the sealing support (34),
**that** when the housing (2) is being mounted the seal (33) on its inner circumference can be brought into a positive mutual engagement with the radial engagement contours (35) while undergoing axial shortening and radial expansion, and can be permanently shaped, which shaping engagement transmits the axial forces necessary for carrying along the seal (33) when the filter (1) is dismantled to replace the filter insert, and
**that** on the outer circumference of the seal support (34) stops (36) are arranged that are spaced apart in the axial direction of the seal support and that limit an axial clearance for movement of the seal (33) on the seal support (34) to a specifiable measure.

2. The filter according to Claim 1, **characterised in that** the seal (33) is an extruded sealing ring of an elastomer.

3. The filter according to Claim 2, **characterised in that** the elastomer is an ethylene-acrylate rubber or polyacrylate rubber or a nitrile rubber or a fluoro-silicone-rubber or an ethylene-propylene-dien-rubber or a fluoro-rubber with a Shore A hardness of between 60 and 70.

4. The filter according to one of Claims 1 to 3, **characterised in that** the at least one stop (36) is formed by the radial engagement contours (35).

5. The filter according to one of Claims 1 to 4, **characterised in that** on the outer circumference of the seal support (34) one or more peripheral ribs or grooves are formed either continuously or in sections in the circumferential direction.

6. The filter according to one of Claims 1 to 5, **characterised in that** on the outer circumference of the seal support (34) one or more peripheral rows of holes or dead-end holes or lugs or cams are formed either continuously or in sections in the circumferential direction.

7. The filter according to one of Claims 1 to 6, **characterised in that** on the outer circumference of the seal support (34) one row of axially outwardly open notches or indentations is formed on one axial edge or two rows of axially outwardly open notches or indentations are formed on both axial edges of the seal support (34), either continuously or in sections in the circumferential direction.

8. The filter according to one of Claims 1 to 7, **characterised in that** hook arms (37) pointing axially towards the housing interior are arranged on the seal support (34) in the axial marginal area thereof that faces the filter insert (3), which hook arms are reversibly compressible in a radially inward direction through contact with the inner circumference (22) of the housing (2) upon its assembly.

9. A filter insert (3) for use in a filter (1) according to any one of Claims 1 to 8, wherein the filter insert (3) is formed by a hollow-cylindrical filter material body (30) that is enclosed on the end faces by two end discs (31), and wherein a seal (33) is arranged on the outer periphery of a circumferential seal support (34) forming a part of the filter insert (3),
**characterised in**
**that** the seal (33) is a sealing ring with a rectangular cross section when in an initial, unloaded state;
**that** radial engagement contours (35) are arranged on the outer periphery of the sealing support (34);
**that** when the housing (2) of the filter (1) is being mounted the seal (33) on its inner circumference can be brought into a positive mutual engagement with the radial engagement contours (35) while undergoing axial shortening and radial expansion, and can be permanently shaped, which shaping engagement transmits the axial forces necessary for carrying along the seal (33) when the filter (1) is dismantled to replace the filter insert, and
**that** on the outer circumference of the seal support (34) stops (36) are arranged that are spaced apart in the axial direction of the seal support and that limit an axial clearance for movement of the seal (33) on the seal support (34) to a specifiable measure.

10. The filter insert according to Claim 9, **characterised in that** the seal (33) is an extruded sealing ring of an elastomer.

11. The filter insert according to Claim 10, **characterised in that** the elastomer is an ethylene-acrylate rubber or polyacrylate-rubber or a nitrile rubber or a fluoro-silicone rubber or an ethylene-propylene-dien-rubber or a fluoro-rubber with a Shore A hardness of between 60 and 70.

12. The filter insert according to one of Claims 9 to 11, **characterised in that** the at least one stop (36) is formed by the radial engagement contours (35).

13. The filter insert according to one of Claims 9 to 12, **characterised in that** on the outer circumference of the seal support (34) one or more peripheral grooves or ribs are formed either continuously or in sections in the circumferential direction.

14. The filter insert according to one of Claims 9 to 13, **characterised in that** on the outer circumference of the seal support (34) one or more peripheral rows of holes or dead-end holes or lugs or cams are formed either continuously or in sections in the circumferential direction.

15. The filter insert according to one of Claims 9 to 14, **characterised in that** on the outer circumference of the seal support (34) one row of axially outwardly open notches or indentations is formed on one axial edge or two rows of axially outwardly open notches or indentations are formed on both axial edges of the seal support (34), either continuously or in sections in the circumferential direction.

16. The filter insert according to any one of Claims 9 to 15, **characterised in that** hook arms (37) pointing axially towards the housing interior are arranged on the seal support (34) in the axial marginal area thereof that faces the filter insert (3), which hook arms are reversibly compressible in a radially inward direction through contact with the inner circumference (22) of the housing (2) upon its assembly.

## Revendications

1. Filtre (1) pouvant être installé sur une bride de raccordement (4), ledit filtre (1) présentant un insert de filtre (3) interchangeable muni d'un corps en tissu d'insert (30) cylindrique creux, inséré à l'avant entre deux disques d'extrémité (31), le filtre (1) présentant un boîtier (2) en forme de gobelet qui est susceptible d'être fermé hermétiquement, sur son bord libre (20) à l'aide d'un joint d'étanchéité (33) périphérique, en l'état monté, contre une surface d'étanchéité (45) de la bride de raccordement (4), et ledit joint d'étanchéité (33) étant agencé sur la circonférence extérieure d'un support de joint d'étanchéité (34) périphérique constituant une partie de l'insert de filtre (3),
**caractérisé en ce**
**que** le joint d'étanchéité (33) est une bague d'étanchéité ayant une section droite rectangulaire dans un état de sortie non contraint,
**que** des contours de prise radiale (35) sont agencés sur la circonférence extérieure du support de joint d'étanchéité (34),
**que** lors du montage du boîtier (2), le joint d'étanchéité (33) est susceptible d'être déformé de manière irréversible et amené, par rétraction axiale et allongement radial sur sa circonférence intérieure, en prise mécaniquement solidaire et mutuelle avec les contours de prise radiale (35), transmettant les forces axiales nécessaires pour emmener le joint d'étanchéité (33) lors du démontage du filtre (1) dans le but de changer l'insert du filtre, et
**que** des butées (36) espacées les unes des autres dans le sens axial du support de joint d'étanchéité et limitant à une taille susceptible d'être prédéfinie un jeu de mouvement axial du joint d'étanchéité (33) sur le support du joint d'étanchéité (34) sont agencées sur la circonférence extérieure du support de joint d'étanchéité (34).

2. Filtre selon la revendication 1, **caractérisé en ce que** le joint d'étanchéité (33) est une bague d'étanchéité extrudée en élastomère.

3. Filtre selon la revendication 2, **caractérisé en ce que** l'élastomère est un caoutchouc d'éthylène-acrylate ou un caoutchouc de polyacrylate ou un caoutchouc nitrile ou un caoutchouc de silicium fluoré ou un caoutchouc d'éthylène-propylène-diène ou un caoutchouc fluoré d'une dureté comprise entre 60 et 70 Shore A.

4. Filtre selon l'une quelconque des revendications 1 à 3, **caractérisé en ce qu'**au moins une des butées (36) est constituée des contours de prise radiale (35).

5. Filtre selon l'une quelconque des revendications 1 à 4, **caractérisé en ce qu'**une ou plusieurs nervures ou gorges périphériques sont formées sur la circonférence extérieure du support de joint d'étanchéité (34), lesquelles sont continues ou partielles dans le sens de la circonférence.

6. Filtre selon l'une quelconque des revendications 1 à 5, **caractérisé en ce que** sur la circonférence extérieure du support de joint d'étanchéité (34), une ou plusieurs rangées de trous ou de trous borgnes ou d'ergots ou de bossages sont formées, lesquelles sont périphériques, continues ou partielles dans le sens de la circonférence.

7. Filtre selon l'une quelconque des revendications 1 à 6, **caractérisé en ce que**, sur la circonférence extérieure du support de joint d'étanchéité (34), des rangées d'entailles ou de cavités axiales ouvertes vers l'extérieur sont formées, à savoir une sur un bord axial ou deux sur les deux bords axiaux du joint d'étanchéité (34), ces rangées étant périphériques, continues ou partielles dans le sens de la circonférence.

8. Filtre selon l'une quelconque des revendications 1 à 7, **caractérisé en ce que** des bras crochets (37) sont agencés sur le support du joint d'étanchéité (34) dans sa périphérie axiale tournée vers l'insert de filtre (3), lesquels sont dirigés dans le sens axial vers l'intérieur du boîtier et sont susceptibles, au contact de la circonférence intérieure (22) du boîtier (2) lors du montage de ce dernier, d'être comprimés radialement par ressort en retour vers l'intérieur.

9. Insert de filtre (3) destiné à une utilisation dans un filtre (1) selon l'une quelconque des revendications 1 à 8, ledit insert de filtre (3) étant constitué par un corps en tissu de filtre (30) cylindrique creux, inséré à l'avant entre deux disques d'extrémités (31), et un joint d'étanchéité (33) étant agencé sur la circonférence extérieure d'un support de joint d'étanchéité (34) périphérique constituant une partie de l'insert de filtre (3),
**caractérisé en ce**
**que** le joint d'étanchéité (33) est une bague d'étanchéité ayant une section droite rectangulaire dans un état de sortie non contraint,
**que** des contours de prise radiale (35) sont agencés sur la circonférence extérieure du support de joint d'étanchéité (34),
**que** lors du montage du boîtier (2) du filtre (1), le joint d'étanchéité (33) est susceptible d'être déformé de manière irréversible et amené, par rétraction axiale et allongement radial sur sa circonférence intérieure, en prise mécaniquement solidaire et mutuelle avec les contours de prise radiale (35), transmettant les forces axiales nécessaires pour emmener le joint d'étanchéité (33) lors du démontage du filtre (1) dans le but de changer l'insert du filtre, et que des butées (36), espacées les unes des autres dans le sens axial du support de joint d'étanchéité et limitant à une taille susceptible d'être prédéfinie un jeu de mouvement axial du joint d'étanchéité (33) sur le support du joint d'étanchéité (34), sont agencées sur la circonférence extérieure du support de joint d'étanchéité (34).

10. Insert de filtre selon la revendication 9, **caractérisé en ce que** le joint d'étanchéité (33) est une bague d'étanchéité extrudée en élastomère.

11. Insert de filtre selon la revendication 10, **caractérisé en ce que** l'élastomère est un caoutchouc d'éthylène-acrylate ou un caoutchouc de polyacrylate ou un caoutchouc nitrile ou un caoutchouc de silicium fluoré ou un caoutchouc d'éthylène-propylène-diène ou un caoutchouc fluoré d'une dureté comprise entre 60 et 70 Shore A.

12. Insert de filtre selon l'une quelconque des revendications 9 à 11, **caractérisé en ce qu'**au moins une des butées (36) est formée par les contours de prise radiale (35).

13. Insert de filtre selon l'une quelconque des revendications 9 à 12, **caractérisé en ce qu'**une ou plusieurs gorges ou nervures périphériques sont formées sur la circonférence extérieure du support de joint d'étanchéité (34), lesquelles sont continues ou partielles dans le sens de la circonférence.

14. Insert de filtre selon l'une quelconque des revendications 9 à 13, **caractérisé en ce qu'**une ou plusieurs rangées de trous ou de trous borgnes ou d'ergots ou de bossages sont formées sur la circonférence extérieure du support de joint d'étanchéité (34), lesquelles sont périphériques, continues ou partielles dans le sens de la circonférence.

15. Insert de filtre selon l'une quelconque des revendications 9 à 14, **caractérisé en ce que** des rangées d'entailles ou de cavités axiales ouvertes vers l'extérieur sont formées sur la circonférence extérieure du support de joint d'étanchéité (34), à savoir une sur un bord axial ou deux sur les deux bords axiaux du joint d'étanchéité (34), ces rangées étant périphériques, continues ou partielles dans le sens de la circonférence.

16. Insert de filtre selon l'une quelconque des revendications 9 à 15, **caractérisé en ce que** des bras crochets (37) sont agencés sur le support du joint d'étanchéité (34) dans sa périphérie axiale tournée vers l'insert de filtre (3), lesquels sont dirigés dans le sens axial vers l'intérieur du boîtier et sont susceptibles, au contact de la circonférence intérieure (22) du boîtier (2) lors du montage de ce dernier, d'être comprimés radialement par ressort en retour vers l'intérieur.
